(19) Europäisches Patentamt
European Patent Office
Office européen des brevets

(11) **EP 3 268 110 B1**

(12) **FASCICULE DE BREVET EUROPEEN**

(45) Date de publication et mention
de la délivrance du brevet:
**04.08.2021 Bulletin 2021/31**

(21) Numéro de dépôt: **16714482.3**

(22) Date de dépôt: **07.03.2016**

(51) Int Cl.:
**B01D 46/42** (2006.01)     **B01D 46/00** (2006.01)
**B01D 45/08** (2006.01)     **F01M 13/00** (2006.01)
**F01M 13/04** (2006.01)

(86) Numéro de dépôt international:
**PCT/FR2016/050522**

(87) Numéro de publication internationale:
**WO 2016/142615 (15.09.2016 Gazette 2016/37)**

(54) **DISPOSITIF POUR SÉPARER L'HUILE DES GAZ DE CARTER D'UN MOTEUR A COMBUSTION INTERNE**

VORRICHTUNG ZUM ABSCHEIDEN VON ÖL AUS GAS IM KURBELGEHÄUSE EINER BRENNKRAFTMASCHINE

DEVICE FOR SEPARATING OIL FROM GAS IN THE CRANKCASE OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2015 FR 1551989**

(43) Date de publication de la demande:
**17.01.2018 Bulletin 2018/03**

(73) Titulaire: **Sogefi Filtration**
**78280 Guyancourt (FR)**

(72) Inventeurs:
• **BONNE, Samuel**
**14350 La Graverie (FR)**
• **KIENTZLER, Jean-François**
**68127 Biltzheim (FR)**

(74) Mandataire: **Plasseraud IP**
**66, rue de la Chaussée d'Antin**
**75440 Paris Cedex 09 (FR)**

(56) Documents cités:
WO-A1-02/32546          FR-A1- 2 984 175
JP-U- S6 084 714          US-A1- 2007 256 566
US-A1- 2009 100 811          US-A1- 2009 126 575
US-A1- 2010 300 297          US-A1- 2013 032 115
US-A1- 2013 032 115

## Description

### DOMAINE DE L'INVENTION

La présente invention est relative aux dispositifs de séparation d'éléments en suspension dans un gaz issu d'un carter de moteur à combustion interne. Le domaine d'application de l'invention concerne en particulier la séparation d'huile des gaz de carter dans les moteurs thermiques des véhicules routiers (ex : automobiles, poids lourds, motocyclette), bateaux ou moteurs thermiques industriels (groupe électrogène par exemple).

### ARRIERE-PLAN TECHNOLOGIQUE DE L'INVENTION

De manière connue en soi le carter est relié à l'admission d'air du moteur à combustion interne via un dispositif de séparation afin d'évacuer en continu les gaz de carter et d'en extraire l'huile en suspension. C'est ce qui est connu sous le nom de circuit de recyclage des gaz de carter ou gaz de blow-by par l'homme du métier. Différents moyens de séparer l'huile des gaz de carter sont employés dans l'art antérieur, parmi lesquels on peut distinguer les cyclones, les chicanes ou systèmes similaires à multiples changements de direction, les séparateurs centrifuges, les coalesceurs statiques et les coalesceurs dynamiques. On trouve également des systèmes séparateurs par impaction. Dans cette dernière famille, les systèmes comportent un ensemble de trous calibrés ou ouvertures d'accélération similaires faisant face à une plaque d'impaction. Les gaz de carter sont accélérés lors de leur passage dans les trous. Les gouttelettes d'huile sont alors accélérées et projetées contre la plaque d'impaction.

Dans les systèmes séparateurs par impaction qui présentent une plaque d'impaction, les gouttelettes d'huile projetées à vitesse élevée s'agglomèrent sur la surface de la plaque pour former un film d'huile. La vitesse est ensuite diminuée par élargissement de la section de passage et le film d'huile s'égoutte vers le système d'évacuation. Une variante consiste à fixer un feutre coalescent ou non tissé similaire sur la plaque d'impact afin de provoquer la coalescence des plus fines gouttelettes d'huile avant l'impact sur la plaque. Ceci a pour effet d'augmenter significativement l'efficacité de séparation de la phase aérosol d'huile. Les séparateurs à élément d'impaction offrent un meilleur compromis efficacité / perte de charge que les séparateur cycloniques. Cependant, la perte de charge de ces systèmes peut être élevée en cas de débit de gaz augmenté.

Certains systèmes intègrent également un clapet autorisant un plus grand débit, sensible à la pression, afin de contourner en partie des ouvertures d'accélération formées dans une paroi de transfert (paroi qui précède la plaque d'impaction). En fin de vie d'un séparateur, le débit des gaz de carters est typiquement plus élevé (par exemple double ou triple du débit nominal considéré pour un moteur neuf).

Les solutions qui permettent d'augmenter le débit sont donc intéressantes pour limiter la perte de charge au niveau de la paroi de transfert. Par exemple, les figures 2a-2c du document US 7 799 109 montrent une paroi de transfert placée en vis-à-vis d'une plaque d'impaction et pourvue d'une pluralité d'ouvertures pour accélérer l'écoulement des gaz chargés. Il est prévu un clapet formé en matière souple qui se déforme pour définir une ouverture auxiliaire de grande section lorsqu'un seuil de pression (surpression) est atteint en amont de la paroi de transfert.

Ce type de solution présente cependant des limites, notamment en raison d'une sensibilité à la température de la matière souple et parce que, même à faible débit, les clapets peuvent présenter un état légèrement ouvert (la fermeture étant progressive). Un mauvais rendement de séparation peut alors être observé notamment pendant les phases de transition. En outre, une portion d'obturation en matière souple peut souvent s'user de manière rapide (risques d'usure).

Il existe donc un besoin pour séparer de manière efficace l'huile des gaz de carters par impaction (afin *in fine* d'améliorer la durabilité d'un moteur), tout en prenant en compte les variations de débit au cours du temps.

On connaît, par le document US 2013/0032115 A1, le recours à des clapets non hermétiques qui présentent des ouvertures formées dans l'élément mobile (élément à obturation partielle). Quelle que soit la position du clapet, les gaz circulent dans une zone à l'arrière du clapet où est placé un ressort hélicoïdal. Ce type de clapet présente des problèmes de stabilité dans un environnement généralement soumis à des vibrations. Il est prévu, dans certaines formes de réalisation (cf. figures 8 et 9 du document US 2013/0032115 A1), de guider l'élément d'obturation pour stabiliser le clapet. Dans ce cas, il est nécessaire de prévoir un siège complexe en au moins deux parties et il existe davantage de frottements entre le clapet et la paroi de transfert, ce qui use prématurément ce genre de système ou le rend moins efficace.

### OBJETS DE L'INVENTION

La présente invention a pour but de pallier un ou plusieurs des inconvénients susmentionnés en proposant un dispositif de déshuilage des gaz issus d'un carter moteur qui reste simple de conception et d'intégration, tout en présentant un bon compromis entre la perte de charge d'une part et l'efficacité de la séparation d'autre part.

A cet effet, l'invention concerne un dispositif d'épuration tel que défini dans la revendication 1.

Grâce à cette disposition, l'ouverture auxiliaire (plus large que les ouvertures étroites pour la distribution accélérée) définit un passage de contournement de la ou des ouvertures de distribution accélérée en cas de surpression du côté de l'amenée. L'organe de rappel permet d'obtenir de façon fiable et répétée l'obturation de l'ouverture auxiliaire à bas débit. En outre, la position rapprochée entre l'élément d'obturation et la surface de guidage d'huile (surface d'impaction et de guidage) permet de définir une voie de contournement qui ne rallonge pas ou très peu la distance de parcours par rapport aux écoulements de gaz au travers des ouvertures de distribution accélérée. Un gain en compacité du dispositif peut alors être obtenu. La surface de guidage de la paroi de déviation s'étend typiquement jusqu'à un bord inférieur et permet de guider l'huile par gravité vers un conduit de drainage pour l'huile.

L'organe de rappel est préférentiellement agencé dans une zone en arrière de l'ouverture auxiliaire, du côté de la paroi de déviation. L'organe de rappel comprend une ou plusieurs portions de liaison raccordées à l'une de la paroi de déviation et la portion de paroi stationnaire, l'organe de rappel comportant en outre au moins une extrémité solidaire de l'élément d'obturation. La fonction de rappel peut être obtenue par une structure de rappel élastique, une structure de répulsion magnétique entre deux organes complémentaires ou par une autre structure fonctionnellement similaire. De préférence, l'organe de rappel s'étend entre deux points de jonction : l'un avec l'élément d'obturation qui obture l'ouverture auxiliaire par l'arrière et l'autre avec la paroi de déviation. Avec cet agencement, il est permis d'obtenir un clapet particulièrement stable (malgré un environnement soumis à des nombreuses vibrations) et qui améliore ainsi l'obturation de l'ouverture auxiliaire.

Selon une particularité, l'élément d'obturation est de section supérieure à la section définie par l'ouverture auxiliaire pour fermer hermétiquement l'ouverture auxiliaire dans un état en appui contre un siège du clapet, le siège du clapet étant de préférence défini par une zone annulaire bordant l'ouverture auxiliaire. On comprend que l'élément d'obturation peut être défini par un élément non percé.

Selon une particularité, la paroi de transfert est adaptée pour orienter vers la paroi de déviation, selon une unique direction générale d'écoulement, les gaz chargés arrivant par l'amenée (direction définie au moins dans la configuration sans surpression). La paroi de déviation s'étend en travers par rapport à cette unique direction générale d'écoulement des gaz chargés. Dans ce cas, la paroi de transfert (qui est typiquement sous une forme de plaque non annulaire) peut être simple de conception et montée simultanément avec la paroi de déviation dans une canalisation d'un couvre-culasse. On comprend que les ouvertures respectives formées à travers la paroi de transfert définissent ainsi des directions d'écoulement avec une même orientation générale vers la surface de guidage de la paroi de déviation, ce qui n'est pas le cas par exemple d'une paroi cylindrique avec des ouvertures permettant un écoulement centrifuge de gaz dans des directions divergentes.

Selon une particularité, le dispositif comprend l'amenée et l'élément d'obturation s'étend parallèlement à la portion de paroi stationnaire et présente un bord annulaire, le clapet comprenant de préférence une tige qui s'étend perpendiculairement à la portion de paroi stationnaire, à l'opposé de l'amenée depuis une face intérieure de l'élément d'obturation. On comprend que l'élément d'obturation vient s'appuyer sur le pourtour de l'ouverture auxiliaire, qui définit un siège de clapet. Le clapet peut avantageusement être guidé par la tige. Plus généralement, on comprend que le clapet est de type anti-retour et mobile par une poussée dirigée vers la paroi de déviation.

Comme indiqué par le terme « stationnaire », on comprend que la paroi avec les passages n'est ni mobile ni déformable, de sorte que la ou les ouvertures de distribution accélérée ont une taille (calibrée) et une forme prédéterminées indépendamment de variations de conditions de pression ou de température dans la zone du couvre-culasse ou zone analogue d'intégration du dispositif.

Dans un mode de réalisation préféré, le tronçon de séparation comprend au moins un déflecteur s'étendant en périphérie de l'élément d'obturation pour orienter vers la paroi de déviation, dans la position éloignée du siège de l'élément d'obturation, tout ou partie de l'écoulement de gaz chargés passant entre un bord de délimitation de l'ouverture auxiliaire et le bord annulaire. Cet agencement permet d'obtenir une séparation d'huile pour le flux de contournement des ouvertures étroites, par impaction sur la paroi de déviation.

Dans divers modes de réalisation du dispositif d'épuration des gaz de carter selon l'invention, on peut éventuellement avoir recours en outre à au moins l'une des dispositions suivantes :

- le déflecteur est intégralement formé avec la portion de paroi stationnaire et présente de préférence une pluralité de projections qui font saillie parallèlement à un axe central de l'ouverture auxiliaire.

- les projections sont configurées en deux séries, en définissant d'une part des premiers déflecteurs radialement plus proches du bord annulaire, et d'autre part des deuxièmes déflecteurs radialement plus éloignés du bord annulaire, ces premiers et deuxièmes déflecteurs étant agencés en alternance.

- l'organe de rappel est un organe de rappel élastique entièrement localisé entre la paroi de transfert et la paroi de déviation ou qui s'étend jusqu'à une extrémité placée plus en arrière que la surface de guidage d'huile (un montage du côté arrière, dans la chambre d'impaction, permet d'obtenir de façon répétable la même configuration d'obturation et procure une très bonne stabilité du clapet malgré les vibrations du moteur ; dans des options avec translation de l'élément d'obturation, il est avantageux pour la stabilité de former un logement dans un canal de guidage suffisamment long, qui de préférence s'étend plus en arrière que la zone d'impact).

- le tronçon de séparation comporte en outre au moins une section de sortie du côté de la paroi de déviation, qui débouche dans un canal d'évacuation d'huile, la section de sortie étant délimitée par un bord d'extrémité de la paroi de déviation qui s'étend entre deux extrémités distantes et opposées de la paroi de déviation.

- la paroi de déviation de flux de gaz est sous la forme d'une plaque d'impaction, qui s'étend parallèlement à la portion de paroi stationnaire, un volume intérieur étant délimité entre la paroi de transfert et la paroi de déviation.

- le clapet est guidé en translation dans un logement recevant une extrémité de l'organe de rappel, le logement étant solidaire de ou formé par la plaque d'impaction.

- la paroi de déviation comprend une plaque lisse ou nervurée, préférentiellement recouverte d'un média coalesceur du côté du volume intérieur.

- la paroi de déviation est recouverte d'un média non tissé du côté du volume intérieur.

- plusieurs ouvertures de distribution accélérée sont prévues dans la portion de paroi stationnaire, l'ouverture auxiliaire étant ovale, oblongue ou circulaire et définissant un diamètre maximal D2, la relation suivante étant satisfaite :

$$D2/D1 > 4,5$$

où D1 représente un diamètre maximal de l'une des ouvertures de distribution accélérée.

- l'élément d'obturation est en appui sur une face annulaire interne de la paroi de transfert (cette face étant donc en vis-à-vis de la paroi de déviation en s'étendant à une première distance de la paroi de déviation), la portion de paroi stationnaire étant placée à l'extrémité d'une projection qui est en saillie vers la paroi de déviation depuis la face annulaire interne, de sorte que l'ouverture de distribution accélérée s'étend à une deuxième distance, inférieure à la première distance, de la paroi de déviation.

- la paroi de transfert comporte aussi un canal additionnel de distribution accélérée, de préférence parallèle à un axe central de l'ouverture auxiliaire, qui s'étend au travers de la paroi de transfert entre une première extrémité définissant une ouverture d'accès et une deuxième extrémité déformable qui fait face à la paroi de déviation, la deuxième extrémité déformable étant adaptée pour définir une section de passage dont la taille augmente du fait de la déformation de cette deuxième extrémité lorsque le débit du flux de gaz dans l'amenée augmente (avec ce type de distribution, on peut cumuler deux modes différents d'accroissement progressif du débit, dans une même paroi de transfert qui est typiquement plane).

- l'un au moins parmi la paroi de transfert et la paroi de déviation comprend des organes d'attache répartis autour de l'ouverture auxiliaire et s'étendant parallèlement à un axe central de l'ouverture auxiliaire, afin de maintenir un espacement prédéterminé entre la paroi de transfert et la paroi de déviation, l'un au moins des organes d'attaches traversant une couche définie par un matériau fibreux, de préférence un matériau non tissé.

BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :

- la figure 1 est une vue en coupe verticale du dispositif de séparation selon un premier mode de réalisation conforme à l'invention ;
- la figure 2 est une vue en perspective du dispositif de séparation de la figure 1, illustrant un exemple d'intégration dans un couvre-culasse ;
- les figures 3 et 4 montrent des éléments constitutifs du dispositif de séparation, dans une forme de réalisation avec raccordement direct entre la paroi de déviation et la paroi de transfert ;
- la figure 5 est une vue qui diffère de celle de la figure 1 en ce que le clapet est dans sa position de retrait (vers l'arrière), sous l'effet d'une surpression ;
- les figures 6 et 7 sont des vues en perspective montrant respectivement deux exemples de réalisation de la paroi de transfert ;
- la figure 8 représente, dans une configuration fermée, une variante de clapet qui est situé en arrière d'une ouverture auxiliaire et présente un encombrement réduit ;
- la figure 9 représente une vue similaire à celle de la figure 5, montrant l'effet d'une surpression pour le clapet de la figure 8.

DESCRIPTION DES MODES DE REALISATION PREFERES DE L'INVENTION

Sur les différentes figures, des références identiques indiquent des éléments identiques ou similaires.

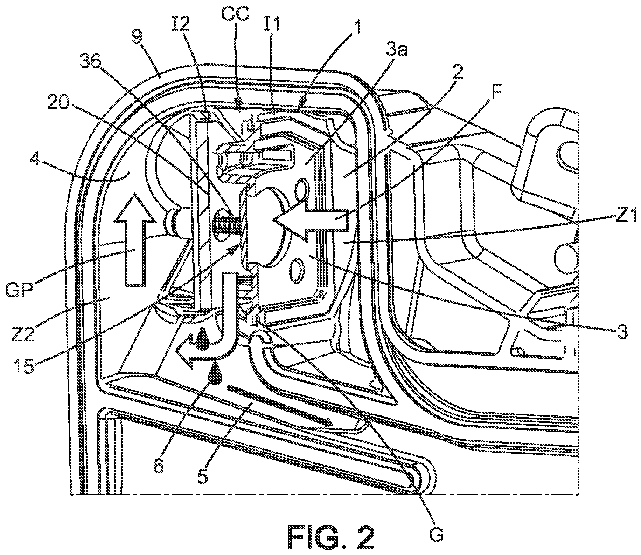

En référence à la figure 2, le dispositif de séparation 1 permet de séparer les parties liquides (et éventuellement solides) des gaz issus du carter de moteur à combustion interne et qui sont directement issues du carter. Une amenée 2 des gaz chargés peut s'étendre jusqu'à une face externe 3a d'une paroi de transfert 3 appartenant au dispositif de séparation 1. Le dispositif de séparation 1 fait typiquement partie d'un sous-ensemble de moteur avec une liaison rejoignant l'admission d'air. Une conduite 4 d'évacuation de gaz épurés est formée dans ce sous-ensemble, ici à un niveau au moins aussi élevé que la paroi de transfert 3. La conduite 4 est de préférence directement raccordée à la liaison qui rejoint l'admission d'air. A un niveau qui est typiquement plus bas que la paroi de transfert 3, en aval de cette paroi de transfert 3, il est prévu un canal 5 d'évacuation de l'huile séparée 6.

A titre d'exemple non limitatif, le dispositif de séparation 1 peut être localisé dans une canalisation CC d'un couvre-culasse, dans un véhicule motorisé. Le dispositif de séparation 1 présente, entre l'amenée 2 et la conduite 4, un tronçon de séparation 8 permettant d'extraire de l'huile du flux de gaz F acheminé par l'amenée 2.

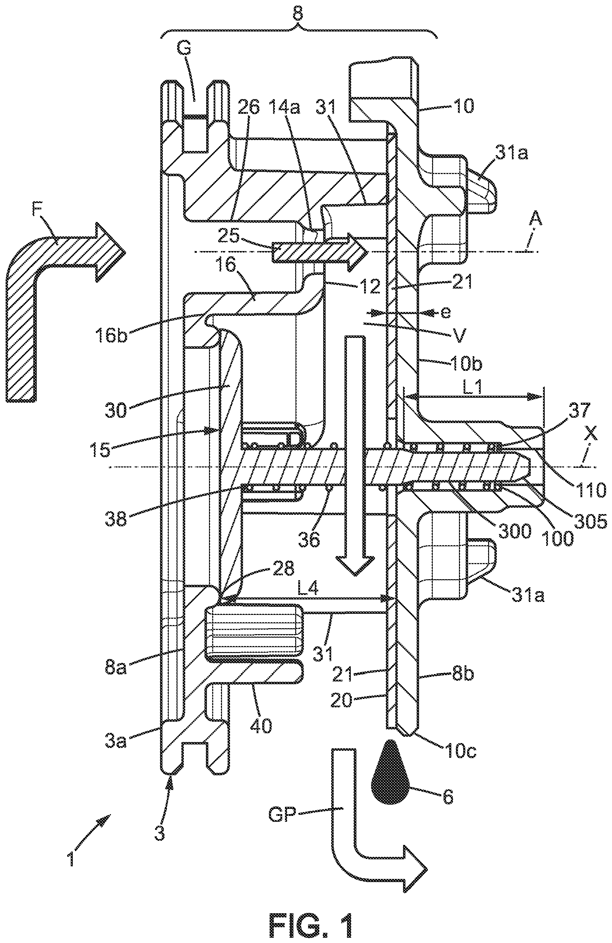

Comme bien visible sur les figures 1, 5 et 9, le tronçon de séparation 8 comporte :

- la paroi de transfert 3 qui définit ici une première extrémité 8a du tronçon de séparation 8, la face externe 3a délimitant une zone Z1 en amont de la séparation ;
- une paroi 10 de déviation de flux de gaz qui définit ici une deuxième extrémité 8b du tronçon de séparation 8, une face externe 10b (opposée à la paroi de transfert 3) et/ou un bord externe 10c de la paroi de déviation 10 délimitant une zone Z2 en aval de la séparation.

La paroi de transfert 3 comprend une portion de paroi stationnaire 12 présentant au moins une ouverture 14a de distribution accélérée, et de préférence plusieurs ouvertures 14a, 14b, 14c, 14d de distribution accélérée, permettant au gaz circulant dans l'amenée 2 de traverser la paroi de transfert 3. Un effet d'accélération est obtenu du fait de la faible section de ces ouvertures 14a, 14b, 14c, 14d par comparaison avec la section de la face externe 3a de la paroi de transfert 3. La direction générale d'écoulement du côté de sortie des ouvertures 14a, 14b, 14c, 14d peut être sensiblement la même, comme illustré par la flèche 25 sur la figure 1 (direction unique d'orientation, en l'absence de surpression).

En référence aux figures 1 et 6-7, la paroi de transfert 3 permet d'orienter selon une unique direction générale d'écoulement les gaz chargés arrivant par l'amenée 2. Dans cet exemple, la portion de paroi stationnaire 12 est placée à l'extrémité 16a d'une projection 16 qui est en saillie vers la paroi de déviation depuis la face annulaire interne. La portion de paroi stationnaire 12 est placée à l'extrémité 16a de façon à définir une face qui est sensiblement plane et proche de la paroi de déviation 10. On comprend que la paroi de déviation 10 s'étend en travers par rapport à l'unique direction générale d'écoulement des gaz chargés. Dans cette option non limitative, la paroi de déviation 10 s'étend perpendiculairement à un axe longitudinal A défini par la projection 16 et éventuellement parallèlement à la portion de paroi stationnaire 12.

Plus généralement, la paroi de déviation 10 est placée dans une zone de passage d'au moins un flux de gaz ayant traversé une ou plusieurs ouvertures 14b, 14c, 14d de distribution accélérée formées dans la paroi de transfert. L'impact sur la paroi de déviation 10 permet une séparation de gouttelettes d'huile 6 qui s'écoulent ensuite par gravité vers le canal 5 d'évacuation. La paroi de déviation 10 est par exemple sous la forme d'une plaque d'impaction (pouvant optionnellement résulter de l'assemblage plusieurs plaques), qui s'étend parallèlement à la portion de paroi stationnaire 12.

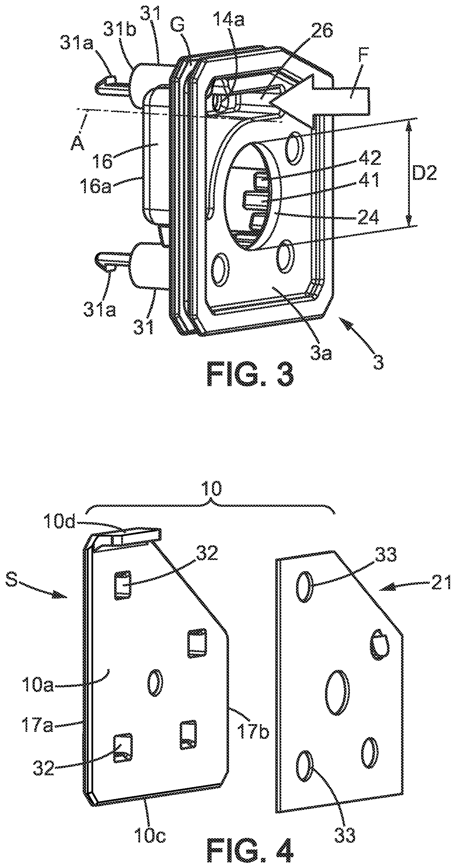

Au moins une section de sortie est prévue du côté inférieur de la paroi de déviation 10 pour éviter toute retenue durable d'huile dans le volume intérieur V le long de la surface 20 de guidage d'huile. La section de sortie du tronçon de séparation 8 débouche à proximité du canal 5, comme bien visible sur la figure 2. Cette section de sortie peut être délimitée par le bord 10c qui s'étend entre deux extrémités distantes et opposées 17a, 17b (cf. figure 4) de la paroi de déviation 10. Le bord 10c peut être plus long que le bord supérieur 10d opposé (cf. figure 4 notamment), de sorte que la section de sortie est une section qui est typiquement élargie par rapport à la zone de répartition des ouvertures 14a, 14b, 14c, 14d de distribution accélérée. Ceci permet de ralentir l'écoulement du côté de la section de sortie et limiter les turbulences (en minimisant le risque d'entraîner des gouttelettes d'huile 6 vers la conduite 4 d'évacuation de gaz).

Dans le volume intérieur V, délimité entre la paroi de transfert 3 et la paroi de déviation 10, les gaz chargés passant par les ouvertures 14b, 14c, 14d sont dirigés sur une surface 20 de guidage d'huile de la paroi de déviation 10, ici selon une direction sensiblement horizontale. Ce volume intérieur V correspond donc à une chambre d'impaction, sans cloison intermédiaire entre la paroi de transfert 3 et la paroi de déviation 10. La surface 20 s'étend ici de manière descendante, de préférence verticalement, jusqu'à un bord inférieur défini par le bord externe 10c. Un guidage de l'huile par gravité est permis par cette surface 20. Un média permettant de faire grossir les gouttelettes d'huile par coalescence ou tout autre média poreux adapté peut faire partie de la paroi de déviation 10 en définissant la surface de guidage 20. On comprend que la paroi de déviation 10 peut ainsi inclure un média non tissé 21 du côté du volume intérieur V. Dans des options de réalisation, la paroi de déviation 10 comprend une plaque lisse ou nervurée, préférentiellement recouverte d'un média non tissé 21 coalesceur du côté du volume intérieur V. Bien entendu, les options sans média dans la paroi de déviation 10 peuvent aussi convenir.

En référence à la figure 2, le tronçon de séparation 8 forme une délimitation entre la zone amont Z1 de gaz non traités F communiquant avec le carter moteur et la zone aval Z2 de gaz traités GP communiquant avec la sortie via la conduite 4. Les gaz non traités F chargés en aérosol d'huile qui entrent dans le dispositif de séparation 1 via l'amenée 2 viennent buter, avec un impact pour la phase liquide, contre la paroi de déviation 10 pour ressortir du côté inférieur du tronçon de séparation 8, ici en traversant le média non tissé 21 ou média similaire. A l'intérieur du média 21, on comprend que les gouttelettes d'huile 6, au contact des fibres du média 21, se regroupent pour former de plus grosses gouttes qui sont ensuite poussées par le flux de gaz et la gravité vers la zone inférieure avec le canal 5. Un média 21 muni de telles fibres exerce ainsi une fonction de coalescence de l'huile.

Les gaz traités GP sont guidés vers un passage, ici défini par la conduite 4, qui diverge par rapport au trajet des gouttelettes d'huile 6, afin de se protéger des projections d'huile contre une face inférieure située à l'aplomb du bord inférieur 10c.

Lorsque le tronçon de séparation 8 est solidaire d'un couvercle 9 de culasse de moteur à combustion interne, la paroi de transfert 3 peut être montée dans le couvercle 9 de culasse de façon à former une barrière étanche aux fluides qui empêche le retour, dans l'amenée 2, de gaz ayant subi une déviation par impact contre la paroi de déviation 10. En particulier, le bord périphérique de l'ensemble ou pièce monobloc formant la paroi de transfert 3 peut être fixé à une première interface I1 de montage qui forme un premier cadre sans laisser de passage de contournement. Une gorge annulaire périphérique G peut ainsi être définie pour s'engager avec la première interface I1.

Pour ce qui concerne la paroi de déviation 10, celle-ci peut être définie par une plaque d'impaction ayant plus de la moitié de la circonférence continûment fixée de manière étanche à une deuxième interface I2 de montage. La partie restante du bord correspond notamment au bord externe 10c et s'étend à distance d'un fond d'écoulement de gouttelettes d'huile 6, 6' où peut être formée l'entrée du canal 5.

En référence aux figures 3 et 4, on peut voir que le tronçon de séparation 8 peut résulter de l'assemblage de trois éléments ici parallèles (qui s'étendent alors chacun perpendiculairement à l'orientation unique définie par la ou les ouvertures 14a, 14b, 14c, 14d) :

- la paroi de transfert 3, qui peut être rigide et obtenue par moulage d'une matière plastique ou composite ;
- un support S tel qu'une plaque d'impaction, en plastique rigide et/ou optionnellement un autre matériau rigide et léger (par exemple en aluminium), définissant une couche arrière non déformable de la paroi de déviation 10 dans la configuration assemblée du tronçon de séparation 8 ;
- un élément optionnel tel qu'un média fibreux de type non tissé 21, conformé en plaque ou autre format en correspondance avec le format du support S.

L'un au moins parmi la paroi de transfert 3 et la paroi de déviation 10 comprend des organes d'attache 31, 32 répartis autour de l'ouverture auxiliaire 24 et s'étendant parallèlement à un axe central X de l'ouverture auxiliaire 24, afin de maintenir un espacement prédéterminé entre la paroi de transfert 3 et la paroi de déviation 10. Dans l'exemple illustré, l'un au moins des organes d'attaches 31, 32 est défini par un organe mâle 31 s'étendant depuis la face intérieure de la paroi de transfert 3 et traversant la couche définie par l'élément optionnel. De préférence, le média non tissé 21 qui constitue l'élément optionnel présente un ou des orifices 33 prédéfinis permettant le passage des organes mâle 31, sans détérioration du média non tissé 21 ou matériau analogue.

Le support S présente des cavités 32 configurées pour guider et bloquer les organes mâles 31. Des ergots de retenue 31a sont par exemple formés du côté de l'extrémité libre de ces organes mâles 31, afin de verrouiller la position d'assemblage entre la paroi de transfert 3 et la paroi de déviation 10. Lorsqu'un média non tissé 21 est utilisé, les organes mâles 31 peuvent présenter un épaulement axial 31b qui vient en appui contre la surface du média non tissé 21 opposée au support S. Cet appui permet de maintenir le média non tissé 21 accolé contre le support S, sans recours à un collage. L'assemblage est ici simple, notamment parce que la paroi de transfert 3 est une pièce moulée en plastique qui intègre les organes mâles 31 et peut se fixer rapidement par clipsage sur le support S.

Une ouverture auxiliaire 24 prévue dans la paroi de transfert 3 et un exemple de clapet 15 associé, sensible à une surpression côté amont, vont à présent être décrits en référence aux figures 1 à 3 et 5-6.

L'ouverture auxiliaire 24, distincte de la ou des ouvertures 14a, 14b, 14c, 14d de distribution accélérée, est formée dans la paroi de transfert 3 et présente une section plus large que celle de n'importe laquelle des ouvertures 14a, 14b, 14c, 14d. Sans que ce soit limitatif, cette section peut être ovale, oblongue ou circulaire et un diamètre maximal D2 peut être défini par l'ouverture auxiliaire 24, comme bien visible sur la figure 3. Le clapet 15 présente un élément d'obturation 30 de section supérieure à la section définie par l'ouverture auxiliaire 24, de préférence avec une forme externe comparable à son bord annulaire 30a. Le siège du clapet 15 est ici défini par une face annulaire interne 28 (cf. figure 1) de la paroi de transfert 3. Bien que l'ouverture 24 soit ici obturée par un élément d'obturation 30 réalisé d'une pièce, on peut aussi obtenir un élément d'obturation 30 comparable résultant de l'assemblage de plusieurs pièces.

L'élément d'obturation 30, qui s'étend dans le volume intérieur V, est en appui sur une zone de siège annulaire continue de cette face annulaire interne 28. On comprend que cette zone de siège peut être plus éloignée de la paroi de déviation 10 que l'extrémité 16a de la projection 16. L'élément d'obturation 30 est mobile et un organe de rappel 36, qui présente ici une extrémité fixe 37 montée solidaire de la paroi de déviation 10, sollicite le clapet 15 vers une position de fermeture dans laquelle l'élément d'obturation 30 ferme l'ouverture auxiliaire 24 (fermeture complète en pratique, en l'absence de surpression du côté de la zone amont Z1). Comme bien visible sur la figure 1, l'élément d'obturation 30 peut s'étendre optionnellement de manière parallèle à la paroi de transfert 3. L'organe de rappel 36 est de préférence placé entièrement en arrière par rapport à l'ouverture auxiliaire 24.

Dans l'exemple illustré, tandis qu'une voie de guidage 26 peut être définie parallèlement à l'axe longitudinal A dans la partie creuse de la projection 16, pour permettre de rapprocher les ouvertures 14a, 14b, 14c, 14d de la paroi de déviation 10, l'ouverture auxiliaire 24 peut être définie sensiblement au même niveau que la base 16b de la projection 16. L'ouverture auxiliaire 24 peut être placée de façon centrale dans la paroi de transfert 3, à une plus grande distance radiale de la gorge G ou pourtour similaire que n'importe quel axe longitudinal de passage des ouvertures 14a, 14b, 14c, 14d.

On comprend ici qu'un guidage longitudinal des gaz chargés (mélange gaz-liquide) est réalisé du côté amont de la paroi de transfert 3 pour le flux traversant les ouvertures 14a, 14b, 14c, 14d, plus petites, tandis qu'il n'y a (de préférence) pas de guidage longitudinal avant la traversée de l'ouverture auxiliaire 24.

Une telle configuration avec davantage d'espacement dans le volume intérieur V entre l'ouverture auxiliaire 24 et la paroi de déviation 10 (par comparaison avec l'espacement au niveau des ouvertures 14a, 14b, 14c, 14d de distribution accélérée) permet de placer un ou plusieurs déflecteurs 40, 41, 42 en périphérie de l'élément d'obturation 30. Ici une portion de paroi latérale de la projection 16 définit tout ou partie d'un premier déflecteur 40, qui optionnellement peut entourer de façon continue l'élément d'obturation 30, avec un faible espacement.

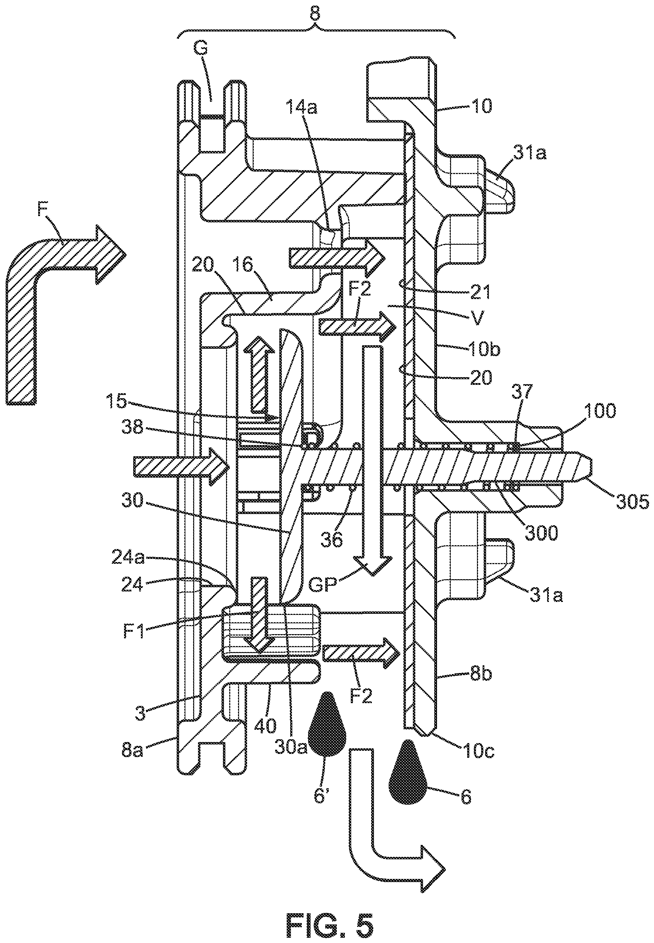

On comprend que la paroi de déviation 10, ici pourvue du média non tissé 21, peut s'étendre de façon plane à la fois en vis-à-vis de la ou des ouvertures 14a, 14b, 14 de distribution accélérée et en vis-à-vis de l'ouverture auxiliaire 24. L'organe de rappel 36 est typiquement entouré par le premier déflecteur 40 et d'éventuels déflecteurs additionnels permettant d'orienter et recentrer le flux admis à travers l'ouverture auxiliaire 24 vers la paroi de déviation 10 comme illustré par les flèches F2 sur la figure 5, en limitant la composante radiale de ce flux. Après l'impact, un flux descendant de gaz déchargés en particules est dirigé vers la sortie.

En comparant la figure 1 et la figure 5, on comprend que l'ouverture du clapet 15 correspond à une fonction de by-pass. En effet en cas de surpression pour le flux F de gaz non traités acheminé via l'amenée 2, le ressort ou élément analogue qui définit ici l'organe de rappel 36 est comprimé par rapport à sa position par défaut montrée sur la figure 1, ce qui permet de définir une voie de passage de section plus importante pour les gaz non traités F. Autrement dit, l'ouverture auxiliaire 24 définit un passage de contournement de la ou des ouvertures 14a, 14b, 14c, 14d de distribution accélérée en cas de surpression du côté de l'amenée 2. A titre d'exemple, un ressort avec constante K supérieure à 0,06 N/mm peut être utilisé. Une longueur au repos de l'ordre de 20 mm peut, dans ce cas non limitatif, être adaptée pour un gain en compacité.

Plus généralement, l'organe de rappel 36 est configuré pour permettre à tout ou partie de l'élément d'obturation 30 de se rapprocher de la surface de guidage 20 en cas de surpression du côté de l'amenée 2, de préférence de façon à ce que l'élément d'obturation 30 occupe une position éloignée de la paroi de transfert 3. L'extrémité fixe 37 est ici en appui contre un épaulement 100 ou butée similaire, formé dans un logement 110 défini par un évidement ou un passage traversant du support S ou couche arrière rigide similaire de la paroi de déviation 10.

L'organe de rappel 36 sollicite ici l'élément d'obturation 30 vers la position de fermeture. L'organe de rappel 36 est ici un ressort s'étendant parallèlement à l'axe central X, depuis l'extrémité fixe 37 jusqu'à une extrémité mobile 38 sur laquelle prend appui l'élément d'obturation 30 ou une projection solidaire en coulissement de cet élément d'obturation 30. Le ressort entoure une tige 300 qui s'étend depuis l'élément d'obturation 30 (ici plan) jusqu'à l'extrémité libre 305, comme bien visible sur les figures 1 et 5. L'extrémité libre 305 coulisse au travers du logement 110, vers l'arrière lorsque l'élément d'obturation 30 s'éloigne de l'ouverture auxiliaire 24. En cas de surpression des gaz non traités F, on comprend que le flux sous pression peut pousser l'extrémité mobile 38 (qui est montée solidaire de l'élément d'obturation 30) vers l'arrière. L'élément d'obturation 30 s'actionne et se déplace ainsi de manière comparable à un bouton poussoir, dans la même direction que l'orientation des gaz dans la configuration sans surpression.

Le logement 110 est délimité par une face tubulaire, permettant un guidage en coulissement du clapet 15. Plus généralement, on comprend que le clapet 15 est guidé en translation dans un logement 110 recevant de préférence une extrémité fixe 37 de l'organe de rappel 36. Ce logement 110 peut être formé dans une pièce rapportée solidaire du support S ici formé par la plaque d'impaction.

Comme visible sur la figure 1, la longueur L1 de ce logement 110 est très supérieure à l'épaisseur e minimale de la paroi de déviation 10, ce qui permet de stabiliser du clapet 15. Le guidage parallèle à l'axe central X permet de conserver l'orientation du clapet 15 malgré les vibrations du moteur. Dans un mode de réalisation non limitatif, la longueur L1 dépasse un cinquième, et de préférence un quart, de la distance L4 mesurée longitudinalement entre l'ouverture auxiliaire 24 et le débouché du logement 110 dans le volume intérieur V. De préférence, la longueur L1 peut rester inférieure ou égale à la distance L4 et/ou la somme L1+L4 peut rester inférieure à 80 ou 110 mm, de préférence inférieure ou égale à 30 ou 40 mm, ce qui présente en pratique une très bonne compacité pour le dispositif de séparation 1. Dans l'exemple représenté ici, la somme L1+L4 représente environ 20 mm.

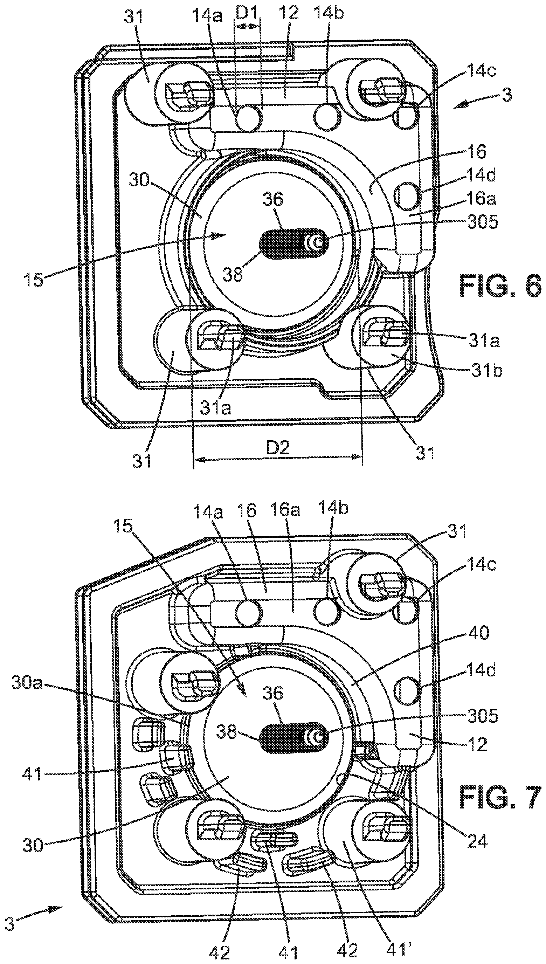

En référence à la figure 6, on peut aussi noter que le diamètre D2 de l'ouverture auxiliaire 24 est typiquement au moins égal à un tiers de la plus grande dimension de la paroi de transfert 3, optionnellement sans que ce diamètre D2 dépasse un seuil de 100 mm, et de préférence un seuil de 60 mm. L'ouverture auxiliaire 24 peut être obturée par une surface de l'élément d'obturation supérieure ou égale à 120 mm². Bien entendu, ces paramètres peuvent évoluer notamment en fonction de l'espace disponible dans la chambre d'impaction. Cependant, il est préférable que la dimension caractéristique de l'ouverture auxiliaire 24 reste très supérieure à la taille (ici diamètre D1) des ouvertures 14a, 14b, 14c, 14d, qui définissent une section de passage par exemple inférieure ou égale à 10 ou 20 mm².

Si on considère par ailleurs que D1 représente le diamètre maximal de l'une des ouvertures 14a, 14b, 14c, 14d de distribution accélérée, la relation suivante peut typiquement être satisfaite :

$$D2/D1 > 4,5$$

L'élément d'obturation 30, qui peut être plan, s'étend ici parallèlement à la portion de paroi stationnaire 12 où sont prévues la ou les ouvertures 14a, 14b, 14c, 14d de distribution accélérée. Lorsque le clapet 15 présente une tige 300 reçue dans un logement 110 à orientation fixe de guidage, cette tige 300 peut s'étendre perpendiculairement à la portion de paroi stationnaire 12.

Bien que l'exemple illustré sur la figure 1 montre un axe de la tige 300 qui est proche ou coïncide avec l'axe central X de l'ouverture auxiliaire 24, un montage décalé peut aussi permettre d'obtenir les mêmes fonctions de rappel pour maintenir par défaut l'élément d'obturation accolé contre la face annulaire interne 28. Ainsi, la tige 300 peut aussi s'étendre à l'opposé de l'amenée 2 non pas depuis une portion centrale de la face intérieure de l'élément d'obturation 30, mais depuis une zone de marge.

En outre l'effet de rappel être obtenu alternativement par une lame élastique et/ou par un couplage magnétique (possibilité d'avoir des forces d'attraction ou de répulsion dans une direction longitudinale ou radiale). Dans une option avec attraction magnétique par des forces d'attraction dans une direction radiale, on peut utiliser au moins un premier organe magnétique intégré sur le bord annulaire 30a mobile et au moins un deuxième organe magnétique fixe solidaire de la paroi de transfert 3 et sollicitant l'élément d'obturation 30 vers la position de fermeture. Dans une option avec répulsion magnétique selon une direction longitudinale, il suffit de mettre en vis-à-vis deux pôles de même nature. La tige 300 (sans le ressort) et le logement associé 110 peuvent éventuellement être conservés pour ces deux dernières options, le cas échéant avec une butée ou épaulement 100 limitant la course vers l'arrière du clapet 15, ce qui garantit une bonne stabilité de montage.

En référence à la figure 6, on peut voir qu'un seul déflecteur 40, de format annulaire, peut définir une surface d'impact pour une partie du flux F de gaz non traités entrant dans le volume intérieur V par l'ouverture auxiliaire 24, sous l'effet d'une surpression. Dans ce cas, on peut former intégralement (dans une même pièce typiquement en plastique ou en aluminium) le déflecteur 40 et la portion de paroi stationnaire 12.

Dans la variante de réalisation de la figure 7, le déflecteur 40 est seulement défini par la projection 16 et ne s'étend ainsi en vis-à-vis que d'une partie de l'élément d'obturation 30 qui représente entre un tiers et un cinquième de la circonférence complète de l'élément d'obturation 30. Optionnellement, on prévoit une pluralité de déflecteurs 41, 42, définis par des projections qui font saillie parallèlement à l'axe central X de l'ouverture auxiliaire 24, qui coïncide dans cet exemple non limitatif avec l'axe de la tige 300. Plus généralement, une configuration avec une alternance de déflecteurs 41, 42 autour de la circonférence de l'élément d'obturation 30, avec une différence de proximité entre les séries de projections, présente un avantage significatif pour limiter les pertes de charge, tout en conservant l'effet de réorientation du flux gazeux vers la paroi de déviation 10.

Toutes ou une partie des projections peuvent être configurées en deux séries, avec d'une part des premières projections définissant des déflecteurs 40, 41, 41' radialement plus proches du bord annulaire 30a, et d'autre part des deuxièmes projections définissant des déflecteurs 42 radialement plus éloignés du bord annulaire 30a. Ici, les déflecteurs 40, 41 et les déflecteurs 42 sont répartis en alternance sur une zone de pourtour de l'ouverture auxiliaire 24.

Plus généralement, on comprend que le tronçon de séparation 8 comprend au moins un déflecteur 40, 41, 41', 42 s'étendant en périphérie de l'élément d'obturation 30 pour limiter les orientations divergentes du flux et orienter vers la paroi de déviation 10 tout ou partie de l'écoulement de gaz chargés passant entre un bord 24a de délimitation de l'ouverture auxiliaire 24 et le bord annulaire 30a.

La figure 5 illustre schématiquement avec des flèches F1, F2 les directions prises par les gaz chargés lorsque l'élément d'obturation 30 est dans la position éloignée de la paroi de transfert 3 (sous l'effet d'une surpression qui pousse l'élément d'obturation à l'encontre d'un ou plusieurs organes de rappel 36). Des gouttelettes d'huile 6' sont collectées d'une partie des gaz passant par l'ouverture auxiliaire 24 sans nécessité d'impact avec la paroi de déviation 10. De telles gouttelettes d'huile 6' résultent de l'impact avec le ou les déflecteurs 40, 41, 41', 42.

En outre, le rôle de guidage des déflecteurs 40, 41, 41', 42 peut aussi permettre d'orienter le flux de gaz chargés (partiellement déchargés par l'impact contre les déflecteurs 40, 41, 41', 42) selon la même direction générale que celle obtenue en utilisant la ou les ouvertures 14a, 14b, 14c, 14d de distribution accélérée, comme illustré par les flèches F2. L'impact contre la paroi de déviation 10, ici de préférence contre le média non tissé 21 conformé en plaque, permet de séparer des gouttelettes d'huile 6 qui tombent verticalement en étant guidées par la surface de guidage 20. Un effet de double impaction, sans recours à une cloison intermédiaire avec d'autres ouvertures de distribution, peut ainsi être obtenu.

Comme illustré sur la figure 2, le volume intérieur V communique avec le canal 5 d'évacuation de l'huile séparée 6, par une extrémité inférieure du tronçon de séparation 8. Bien que les ouvertures 14a, 14b, 14c, 14d de distribution accélérée soient ici représentées dans une position opposée à l'extrémité inférieure du tronçon de séparation 8, de préférence en s'étendant au dessus d'un axe central de l'ouverture auxiliaire 24, on comprend que les ouvertures 14a, 14b, 14c, 14d peuvent être autrement positionnées en conservant le même type de clapet 15.

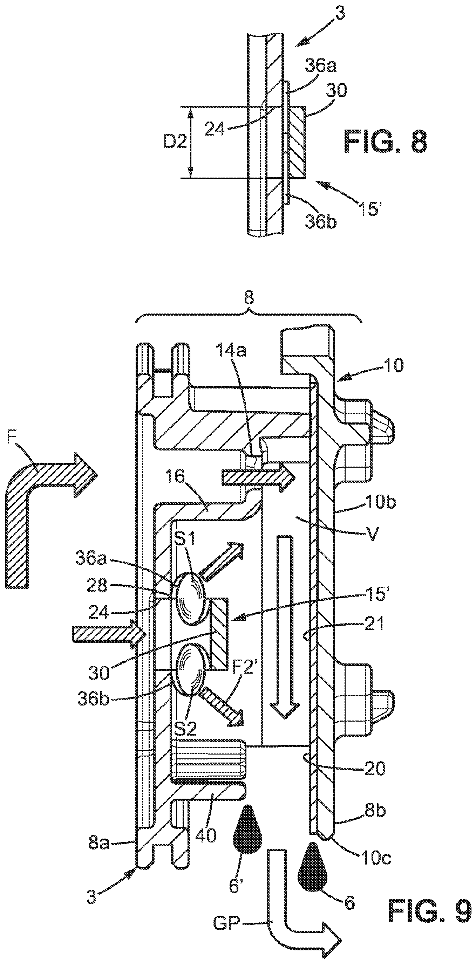

Une variante de réalisation du clapet 15' va à présent être décrite en référence aux figures 8 et 9.

La ou les ouvertures 14a de distribution accélérée peuvent être réalisées comme dans les formes de réalisation précédemment décrites, avec ou sans rapprochement par rapport à la paroi de déviation 10. L'élément d'obturation 30 du clapet 15 est ici maintenu en position d'obturation par un ou plusieurs organes de rappel élastique 36a, 36b, de façon à fermer hermétiquement l'ouverture auxiliaire 24. Chaque organe de rappel élastique 36a, 36b est formé d'une matière plastique à mémoire de forme et raccordé ici intégralement à la paroi de transfert 3, sur la face annulaire 28 selon une localisation adjacente à l'ouverture auxiliaire 24.

On préfère, pour améliorer la stabilité, utiliser une paire d'organes de rappel élastique 36a, 36b à spirale qui sont disposés symétriquement sur les côtés opposés de l'ouverture auxiliaire 24. L'élément d'obturation 30 définit une plaque indéformable, tandis que les organes de rappel élastique 36a, 36b sont étirés vers la paroi de déviation 10, comme bien visible sur la figure 9, lorsque la pression du flux F de gaz non traités augmente. Une tige fixe (non représentée) solidaire de la paroi de déviation 10 peut optionnellement former une butée pour bloquer une position éloignée maximale de l'élément d'obturation 30. La surface S1, S2 définie par chacun des organes de rappel élastique 36a, 36b est déformée en spirale avec un angle prédéterminé. Cela permet de guider les gaz chargés en les faisant tourner hélicoïdalement par guidage sur deux côtés opposés de l'élément d'obturation 30. Un organe de rappel élastique 36b peut s'étendre du côté inférieur, afin de jouer un rôle de déviation qui empêche des flux descendants de gaz d'être dirigées directement au-delà du bord 10c et/ou un organe déflecteur 40 inférieur peut s'étendre à proximité immédiate de l'ouverture auxiliaire 24 pour également jouer un rôle de déviation.

Les flèches F2' indiquent que les directions prises par les gaz correspondent à des trajectoires d'impact sur la paroi de déviation 10, ici avec une mise en contact des gouttelettes 6 contre le média non tissé 21 ou matériau fibreux similaire. Une configuration avec au moins un déflecteur 40, de préférence analogue à l'exemple illustré sur les figures 1 et 5, peut permettre d'obtenir aussi des gouttelettes 6' par impact radial sur le ou les déflecteurs 40. Ainsi, on obtient aussi une configuration compacte, stable, et permettant de réaliser au moins partiellement la séparation dans le cas d'un contournement des ouvertures 14a de distribution accélérée par l'ouverture auxiliaire 24. Ici également, le ou les organes de rappel 36a, 36b, qui s'étendent dans le volume intérieur V en arrière par rapport à l'ouverture auxiliaire 24, permettent à tout ou partie de l'élément d'obturation 30 de se rapprocher de la surface d'impact, typiquement plane, définie par la paroi de déviation 10.

Bien entendu, le clapet 15' peut aussi s'étendre au même niveau que les ouvertures 14a, 14b, 14c, 14d et n'est pas nécessairement de dimension réduite par rapport à l'élément d'obturation 30 montré sur les figures 1 et 5. La forme de réalisation avec un ou plusieurs déflecteurs 40 est préférée pour éviter qu'une partie des gaz puisse emprunter une trajectoire sans déviation par la surface 20 entre l'ouverture auxiliaire 24 et la zone avec le canal 5 (cf. figure 2) qui s'étend sous le tronçon de séparation 8.

Dans une autre forme de réalisation (non représentée) adaptée pour le cas où l'on peut utiliser plusieurs ouvertures auxiliaires de contournement, la paroi de transfert 3 comporte le clapet 15 et également l'un au moins parmi le clapet 15' et un canal à section variable en fonction de la pression dans la zone en amont Z1. Le canal à section variable est défini par un canal additionnel de distribution accélérée, qui s'étend de préférence parallèlement à un axe central X de l'ouverture auxiliaire 24 (optionnellement dans la portion de paroi stationnaire 12). Le canal à section variable s'étend au travers de la paroi de transfert 3 entre une première extrémité définissant une ouverture d'accès et une deuxième extrémité déformable (par exemple de type « bec de canard ») qui fait face à la paroi de déviation 10. La deuxième extrémité déformable permet de définir une section de passage dont la taille augmente du fait de la déformation de la deuxième extrémité, lorsque le débit du flux F de gaz non traités augmente dans l'amenée 2.

Indépendamment de la configuration précise du système d'obturation de l'ouverture auxiliaire 24, il sera apprécié que l'agencement de la paroi de transfert 3 avec une ouverture auxiliaire 24 située à plus grande distance de la surface d'impact que les ouvertures 14a, 14b, 14c, 14d de distribution accélérée permet d'intégrer des surfaces de déviation auxiliaires, ici formées par le ou les déflecteurs 40, 41, 42, qui sont avantageuses pour réorienter des flux de gaz qui évitent un élément d'obturation 30 s'étendant parallèlement à la paroi de déviation 10 et qui forme donc un obstacle (pas de trajectoire courte d'impact possible dans la chambre d'impaction sans déviation auxiliaire dans une zone adjacente au bord annulaire 30a). On préfère former les déflecteurs 40, 41, 42 par des projections qui font saillie parallèlement à la direction générale d'écoulement permise par les ouvertures 14a, 14b, 14c, 14d et à l'axe central X. Ces projections font saillie au moins depuis un niveau de surface nominal où l'ouverture auxiliaire 24 débouche dans le volume intérieur V.

Un des avantages de l'invention est une bonne adaptation à une large gamme de débits pour les gaz non traités F, sans complexifier le tronçon de séparation 8 et en permettant de séparer l'huile même dans la configuration de contournement qui utilise l'ouverture auxiliaire 24 de grande section.

Un autre des avantages d'un dispositif de séparation 1 selon l'invention est qu'il peut être placé dans des endroits resserrés, typiquement dans un couvre culasse (ayant l'avantage d'être généralement démontable de façon séparée), par exemple dans une zone d'étranglement, ou emplacement analogue en dehors du carter de distribution, de sorte qu'il n'est pas soumis aux éclaboussures et arrivées massives d'huile. Il en résulte moins de pics de perte de charge et une meilleure évacuation de l'huile.

Il doit être évident pour les personnes versées dans l'art que la présente invention permet des modes de réalisation sous de nombreuses autres formes spécifiques sans l'éloigner du domaine d'application de l'invention comme revendiqué. Ainsi à titre d'exemple, les termes utilisés pour désigner des éléments constitutifs du tronçon de séparation 8 peuvent, selon les besoins, correspondre à une pièce bien définie ou à un assemblage de plusieurs pièces.

## Revendications

1. Dispositif (1) de séparation pour l'épuration d'un flux (F) de gaz chargés issu d'un carter de moteur à combustion interne, destiné à être monté entre une amenée (2) des gaz chargés et une conduite (4) d'évacuation de gaz épurés, le dispositif de séparation comprenant un tronçon de séparation (8) permettant de séparer de l'huile du flux de gaz, le tronçon de séparation (8) comportant :

   - une paroi de transfert (3) qui comprend une portion de paroi stationnaire (12) présentant au moins une ouverture (14a, 14b, 14c, 14d) de distribution accélérée, et de préférence plusieurs ouvertures de distribution accélérée, permettant au gaz circulant dans l'amenée (2) de traverser la paroi de transfert (3) ;
   - une paroi (10) de déviation de flux de gaz placée dans une zone de passage d'au moins un flux de gaz ayant traversé ladite au moins une ouverture (14a, 14b, 14c, 14d) de distribution accélérée ;
   - une ouverture auxiliaire (24) distincte de la ou des ouvertures (14a, 14b, 14c, 14d) de distribution accélérée, formée dans la paroi de transfert (3) ;
   - un clapet (15 ; 15') ;
   - un siège de clapet, prévu dans la paroi de transfert (3) et défini par le pourtour de l'ouverture auxiliaire (24),
   - un organe de rappel (36) agencé dans une zone dite en arrière de l'ouverture auxiliaire (24), du côté de la paroi de déviation (10) ;

   **caractérisé en ce que** la portion de paroi stationnaire (12) est décalée en périphérie de et vers l'arrière par rapport à l'ouverture auxiliaire (24), le volume intérieur (V) délimité entre la paroi de transfert (3) et la paroi de déviation (10) définissant une chambre d'impaction,
   **et en ce que** le clapet (15 ; 15') présente un élément d'obturation (30) mobile, non percé, et est sollicité par l'organe de rappel (36) vers une position de fermeture dans laquelle l'élément d'obturation ferme l'ouverture auxiliaire (24), l'élément d'obturation (30) étant de section supérieure à la section définie par l'ouverture auxiliaire (24) pour fermer hermétiquement l'ouverture auxiliaire (24) dans un état en appui contre le siège du clapet, l'organe de rappel (36) étant configuré pour permettre à tout ou partie de l'élément d'obturation (30) de se rapprocher d'une surface (20) de guidage d'huile de la paroi (10) de déviation en cas de surpression du côté de l'amenée, ce grâce à quoi l'ouverture auxiliaire (24) définit un passage de contournement de la ou des ouvertures (14a, 14b, 14c, 14d) de distribution accélérée en cas de surpression du côté de l'amenée, le clapet (15) présentant en outre une tige (300) pour le guidage du clapet (15), la tige (300) étant reçue dans un logement (110) à orientation fixe de guidage défini par la paroi (10) de déviation.

2. Dispositif selon la revendication 1, dans lequel la paroi de transfert (3) est adaptée pour orienter selon une unique direction générale d'écoulement les gaz chargés arrivant par l'amenée (2), la paroi de déviation (10) s'étendant en travers par rapport à l'unique direction générale d'écoulement des gaz chargés.

3. Dispositif selon la revendication 1 ou la revendication 2, comprenant l'amenée (2) et dans lequel l'élément d'obturation (30) s'étend parallèlement à la portion de paroi stationnaire (12) et présente un bord annulaire (30a), la tige (300) du clapet (15) s'étendant perpendiculairement à la portion de paroi stationnaire (12), à l'opposé de l'amenée (2) depuis une face intérieure de l'élément d'obturation (30).

4. Dispositif selon la revendication 3, dans lequel le tronçon de séparation (8) comprend au moins un déflecteur (40, 41, 42) s'étendant en périphérie de l'élément d'obturation (30) pour orienter vers la paroi de déviation (10) tout ou partie de l'écoulement de gaz chargés passant entre un bord (24a) de délimitation de l'ouverture auxiliaire (24) et ledit bord annulaire (30a) dans une position de l'élément d'obturation (30) distante de la paroi de transfert (3).

5. Dispositif selon la revendication 4, dans lequel ledit au moins un déflecteur (40, 41, 42) présente une pluralité de projections qui font saillie parallèlement à un axe central (X) de l'ouverture auxiliaire (24).

6. Dispositif selon la revendication 5, dans lequel les projections sont configurées en deux séries, de façon à définir :

   - des premiers déflecteurs (40, 41) radialement plus proches du bord annulaire (30a) ; et
   - des deuxièmes déflecteurs (42) radialement plus éloignés du bord annulaire (30a) ;

   les premiers déflecteurs (40, 41) et les deuxièmes déflecteurs (42) étant agencés en alternance.

7. Dispositif selon l'une quelconque des revendications précédentes, dans lequel le tronçon de séparation (8) comporte en outre au moins une section de sortie du côté de la paroi de déviation (10), qui débouche dans un canal (5) d'évacuation d'huile, la section de sortie étant délimitée par un bord d'extrémité (10c) de la paroi de déviation qui s'étend entre deux extrémités (17a, 17b) distantes et opposées de la paroi de déviation.

8. Dispositif selon l'une quelconque des revendications précédentes, dans lequel la paroi (10) de déviation de flux de gaz est sous la forme d'une plaque d'impaction, qui s'étend parallèlement à la portion de paroi stationnaire (12).

9. Dispositif selon la revendication 8, dans lequel la plaque d'impaction s'étend de préférence parallèlement à la portion de paroi stationnaire (12), le clapet (15) étant guidé en translation au travers de la plaque d'impaction dans ledit logement (110) où est reçue une extrémité (37) de l'organe de rappel (36), sachant que l'organe de rappel (36) est un organe de rappel élastique s'étendant jusqu'à ladite extrémité (37) qui est située à l'intérieur dudit logement (110) et placée plus en arrière que la surface de guidage d'huile.

10. Dispositif selon la revendication 8 ou 9, dans lequel la paroi de déviation (10) comprend une plaque lisse ou nervurée, préférentiellement recouverte d'un média coalesceur du côté du volume intérieur (V).

11. Dispositif selon l'une quelconque des revendications 8 à 10, dans lequel la plaque d'impaction est recouverte d'un média non tissé (21) du côté du volume intérieur (V).

12. Dispositif selon l'une quelconque des revendications précédentes, dans lequel l'élément d'obturation (30) est en appui sur une face annulaire interne (28) de la paroi de transfert (3), la portion de paroi stationnaire (12) étant placée à l'extrémité (16a) d'une projection (16) qui est en saillie vers la paroi de déviation (10) depuis la face annulaire interne (28).

13. Dispositif selon l'une quelconque des revendications précédentes, dans lequel la paroi de transfert (3) comporte en outre un canal de distribution accélérée, de préférence parallèle à un axe central (X) de l'ouverture auxiliaire (24), qui s'étend au travers de la paroi de transfert (3) entre une première extrémité définissant une ouverture d'accès et une deuxième extrémité déformable qui fait face à la paroi de déviation (10), la deuxième extrémité déformable étant adaptée pour définir une section de passage dont la taille augmente du fait de la déformation de ladite deuxième extrémité lorsque le débit du flux de gaz dans ladite amenée (2) augmente.

14. Dispositif selon l'une quelconque des revendications précédentes, dans lequel l'un au moins parmi la paroi de transfert (3) et la paroi de déviation (10) comprend des organes d'attache (31) répartis autour de l'ouverture auxiliaire (24) et s'étendant parallèlement à un axe central (X) de l'ouverture auxiliaire, afin de maintenir un espacement prédéterminé entre la paroi de transfert et la paroi de déviation, l'un au moins des organes d'attaches (31) traversant une couche définie par un matériau fibreux.

15. Dispositif selon l'une quelconque des revendications précédentes lorsqu'elle dépend de la revendication 9, dans lequel l'organe de rappel (36) est un ressort de constante K supérieure à 0,06 N/mm.

**Patentansprüche**

1. Abscheidevorrichtung (1) zum Reinigen eines Stroms (F) verunreinigter Gase aus einem Gehäuse einer Brennkraftmaschine, die dazu bestimmt ist, zwischen einer Zuführung (2) für die verunreinigten Gase und einer Auslassleitung (4) für die gereinigten Gase montiert zu sein, wobei die Abscheidevorrichtung einen Abscheideabschnitt (8) umfasst, der es ermöglicht, das Öl aus dem Gasstrom abzuscheiden, wobei der Abscheideabschnitt (8) Folgendes aufweist:

   - eine Transferwand (3), die einen stationären Wandabschnitt (12) mit zumindest einer Abgabebeschleunigungsöffnung (14a, 14b, 14c, 14d) und vorzugsweise mehreren Abgabebeschleunigungsöffnungen umfasst, die es ermöglichen, dass das in der Zuführung (2) strömende Gas die Transferwand (3) durchquert;

- eine Wand (10) zum Umlenken des Gasstroms, die in einer Durchgangszone zumindest eines Gasstroms, der die zumindest eine Abgabebeschleunigungsöffnung (14a, 14b, 14c, 14d) durchquert hat, angeordnet ist;

- eine Hilfsöffnung (24), die von der bzw. den Abgabebeschleunigungsöffnung(en) (14a, 14b, 14c, 14d) getrennt und in der Transferwand (3) ausgebildet ist;

- ein Ventil (15; 15');

- einen Ventilsitz, der in der Transferwand (3) vorgesehen und durch den Umfang der Hilfsöffnung (24) definiert ist;

- ein Rückstellelement (36), das in einer Zone hinter der Hilfsöffnung (24) auf der Seite der Umlenkwand (10) angeordnet ist;

**dadurch gekennzeichnet, dass** der stationäre Wandabschnitt (12) in Umfangsrichtung und relativ zur Hilfsöffnung (24) nach hinten versetzt ist, wobei das zwischen der Transferwand (3) und der Umlenkwand (10) begrenzte Innenvolumen (V) eine Impaktionskammer definiert, und dass das Ventil (15; 15') ein bewegliches ungebohrtes Verschlusselement (30) aufweist und durch das Rückstellelement (36) in eine Verschlussposition gebracht wird, in der das Verschlusselement die Hilfsöffnung (24) verschließt, wobei das Verschlusselement (30) einen Querschnitt aufweist, der größer als der durch die Hilfsöffnung (24) definierte Querschnitt ist, um die Hilfsöffnung (24) in einem Zustand der Anlage am Ventilsitz hermetisch abzudichten, wobei das Rückstellelement (36) konfiguriert ist, um es dem gesamten Verschlusselement (30) oder einem Teil davon zu ermöglichen, sich im Fall eines Überdrucks auf der Zufuhrseite einer Ölleitfläche (20) der Umlenkwand (10) zu nähern, wodurch die Hilfsöffnung (24) einen Bypasskanal für die Abgabebeschleunigungsöffnung(en) (14a, 14b, 14c, 14d) im Fall eines Überdrucks auf der Zufuhrseite definiert, wobei das Ventil (15) ferner einen Schaft (300) zum Führen des Ventils (15) aufweist, wobei der Schaft (300) in einer fest ausgerichteten Führungsaufnahme (110) aufgenommen ist, die durch die Umlenkwand (10) definiert ist.

2. Vorrichtung nach Anspruch 1, wobei die Transferwand (3) dazu ausgelegt ist, die durch die Zuführung (2) kommenden verunreinigten Gase in eine einzige allgemeine Strömungsrichtung zu lenken, wobei sich die Umlenkwand (10) quer zur einzigen allgemeinen Strömungsrichtung der verunreinigten Gase erstreckt.

3. Vorrichtung nach Anspruch 1 oder Anspruch 2, umfassend die Zuführung (2) und wobei sich das Verschlusselement (30) parallel zum stationären Wandabschnitt (12) erstreckt und einen ringförmigen Rand (30a) aufweist, wobei sich der Schaft (300) des Ventils (15) senkrecht zum stationären Wandabschnitt (12) gegenüber der Zuführung (2) von einer Innenseite des Verschlusselements (30) erstreckt.

4. Vorrichtung nach Anspruch 3, wobei der Abscheideabschnitt (8) zumindest einen Deflektor (40, 41, 42) umfasst, der sich am Umfang des Verschlusselements (30) erstreckt, um den Strom verunreinigter Gase, der in einer von der Transferwand (3) entfernten Position des Verschlusselements (30) zwischen einer Begrenzungskante (24a) der Hilfsöffnung (24) und dem ringförmigen Rand (30a) hindurchströmt, ganz oder teilweise zur Umlenkwand (10) zu lenken.

5. Vorrichtung nach Anspruch 4, wobei der zumindest eine Deflektor (40, 41, 42) mehrere Vorsprünge aufweist, die parallel zu einer Mittelachse (X) der Hilfsöffnung (24) vorstehen.

6. Vorrichtung nach Anspruch 5, wobei die Vorsprünge in zwei Reihen konfiguriert sind, um:

- erste Deflektoren (40, 41), die dem ringförmigen Rand (30a) näher liegen; und
- zweite Deflektoren (42), die vom ringförmigen Rand (30a) radial weiter entfernt sind, zu definieren; wobei die ersten Deflektoren (40, 41) und die zweiten Deflektoren (42) abwechselnd angeordnet sind.

7. Vorrichtung nach einem der vorangehenden Ansprüche, wobei der Abscheideabschnitt (8) ferner zumindest einen Austrittsbereich auf der Seite der Umlenkwand (10) aufweist, der in einen Ölabfuhrkanal (5) mündet, wobei der Austrittsbereich durch einen Endrand (10c) der Umlenkwand begrenzt ist, der sich zwischen zwei beabstandeten und gegenüberliegenden Enden (17a, 17b) der Umlenkwand erstreckt.

8. Vorrichtung nach einem der vorangehenden Ansprüche, wobei die Umlenkwand (10) des Gasstroms in Form einer Prallplatte ausgebildet ist, die sich parallel zum stationären Wandabschnitt (12) erstreckt.

9. Vorrichtung nach Anspruch 8, wobei sich die Prallplatte vorzugsweise parallel zum stationären Wandabschnitt (12) erstreckt, wobei das Ventil (15) verschiebbar durch die Prallplatte in die Aufnahme (110) geführt wird, wo ein Ende (37) des Rückstellelements (36) aufgenommen wird, wobei das Rückstellelement (36) ein elastisches Rückstellelement ist, das sich bis zu dem Ende (37) erstreckt, das sich innerhalb der Aufnahme (110) befindet und weiter hinten als die Ölleitfläche angeordnet ist.

**10.** Vorrichtung nach Anspruch 8 oder 9, wobei die Umlenkwand (10) eine glatte oder geriffelte Platte umfasst, die vorzugsweise auf der Seite des Innenvolumens (V) mit einem Koaleszenzmittel bedeckt ist.

**11.** Vorrichtung nach einem der Ansprüche 8 bis 10, wobei die Prallplatte auf der Seite des Innenvolumens (V) mit einem Vliesmedium (21) bedeckt ist.

**12.** Vorrichtung nach einem der vorangehenden Ansprüche, wobei das Verschlusselement (30) an einer ringförmigen Innenfläche (28) der Transferwand (3) anliegt, wobei der stationäre Wandabschnitt (12) am Ende (16a) eines Vorsprungs (16) angeordnet ist, der von der ringförmigen Innenfläche (28) zur Umlenkwand (10) hin vorsteht.

**13.** Vorrichtung nach einem der vorangehenden Ansprüche, wobei die Transferwand (3) ferner einen Abgabebeschleunigungskanal aufweist, der vorzugsweise parallel zu einer Mittelachse (X) der Hilfsöffnung (24) verläuft und sich durch die Transferwand (3) zwischen einem ersten Ende, das eine Zugangsöffnung definiert, und einem zweiten verformbaren Ende, das der Umlenkwand (10) zugewandt ist, erstreckt, wobei das zweite verformbare Ende dazu angepasst ist, einen Durchgangsbereich zu definieren, dessen Größe aufgrund der Verformung des zweiten Endes zunimmt, wenn der Gasstromdurchsatz in der Zuführung (2) zunimmt.

**14.** Vorrichtung nach einem der vorangehenden Ansprüche, wobei zumindest die Transferwand (3) und/oder die Umlenkwand (10) Befestigungselemente (31) umfassen, die um die Hilfsöffnung (24) herum verteilt sind und sich parallel zu einer Mittelachse (X) der Hilfsöffnung erstrecken, um einen vorbestimmten Abstand zwischen der Transferwand und der Umlenkwand aufrechtzuerhalten, wobei zumindest eines der Befestigungselemente (31) durch eine durch ein Fasermaterial definierte Schicht verläuft.

**15.** Vorrichtung nach einem der vorangehenden Ansprüche, sofern von Anspruch 9 abhängig, wobei das Rückstellelement (36) eine Feder mit einer Konstante K größer als 0,06 N/mm ist.

**Claims**

**1.** Separation device (1) for purifying blow-by gas (F) from a crankcase of an internal combustion engine, intended to be mounted between an inlet (2) for loaded gas and a line (4) for discharging purified gas, the separation device comprising a separation section (8) for separating oil from the blow-by gas, the separation section (8) comprising:

- a transfer wall (3) which comprises a stationary wall portion (12) having at least one accelerated distribution opening (14a, 14b, 14c, 14d), and preferably a plurality of accelerated distribution openings, allowing the gas flowing in the inlet (2) to pass through the transfer wall (3);
- a gas-flow deflection wall (10) positioned in an area of passage for at least one gas flow having passed through said at least one accelerated distribution opening (14a, 14b, 14c, 14d);
- an auxiliary opening (24) separate from the accelerated distribution opening or openings (14a, 14b, 14c, 14d) made in the transfer wall (3);
- a valve (15; 15');
- a valve seat provided in the transfer wall (3) and defined by the annular region bordering the auxiliary opening (24);
- a return member (36) arranged in an area referred to as behind the auxiliary opening (24), on the deflection wall (10) side;

**characterized in that** the stationary wall portion (12) the wall is offset peripherally from and rearward relative to the auxiliary opening (24), the inner space (V) delimited between the transfer wall (3) and the deflection wall (10) defining an impingement chamber,

**and in that** the valve (15; 15') has a movable closure element (30) and is biased by the return member (36) towards a closed position in which the closure element closes the auxiliary opening (24), the closure element (30) having a larger cross-section than the flow area defined by the auxiliary opening (24), in order to hermetically seal the auxiliary opening (24) in a state where it bears against the valve seat, the return member (36) being configured to allow all or part of the closure element (30) to approach an oil guiding surface (20) of the deflection wall in case of overpressure at the inlet side,

by means of which the auxiliary opening (24) defines a passage bypassing the accelerated distribution opening or openings (14a, 14b, 14c, 14d) in case of overpressure at the inlet side,

wherein the valve (15) further includes a rod (300) for guiding the valve (15), the rod (300) being received in a housing (100) of fixed guiding orientation, which is defined by the deflection wall (10).

**2.** Device according to claim 1, wherein the transfer wall (3) is adapted for directing, in a single general direction of flow, the loaded gas arriving through the inlet (2), the deflection wall (10) extending crosswise to the single general direction of flow of loaded gas.

**3.** Device according to claim 1 or claim 2, comprising the inlet (2), and wherein the closure element (30) extends parallel to the stationary wall portion (12) and has an annular edge (30a), the rod (300) of the valve (15) extending perpendicularly to the stationary wall portion (12), opposite the inlet (2), from an inner face of the closure element (30).

4. Device according to claim 3, wherein the separation section (8) comprises at least one baffle (40, 41, 42) extending at the periphery of the closure element (30) so as to direct towards the deflection wall (10) all or part of the flow of loaded gas passing between a boundary edge (24a) of the auxiliary opening (24) and said annular edge (30a) in a position of the closure element (30) that is distanced from the transfer wall (3).

5. Device according to claim 4, wherein said at least one baffle (40, 41, 42) has a plurality of projections which protrude parallel to a central axis (X) of the auxiliary opening (24).

6. Device according to claim 5, wherein the projections are configured in two sets, so as to define:

   - first baffles (40, 41) radially closest to the annular edge (30a); and
   - second baffles (42) radially furthest from the annular edge (30a);

   the first baffles (40, 41) and the second baffles (42) being arranged so as to alternate.

7. Device according to any preceding claim, wherein the separation section (8) further comprises at least one outlet section on the deflection wall (10) side, which opens into an oil discharge channel (5), the outlet section being defined by an end edge (10c) of the deflection wall which extends between two opposite and distanced ends (17a, 17b) of the deflection wall.

8. Device according to any preceding claim, wherein the gas-flow deflection wall (10) is in the form of an impingement plate which extends parallel to the stationary wall portion (12).

9. Device according to claim 8, wherein the impingement plate preferably extends parallel to the stationary wall portion (12), the valve (15) being guided in translation through the impingement plate in said housing (110) receiving one end (37) of the return member (36), wherein the return-member (36) is an elastic return member which extends to said end (37) positioned within said housing (110) and positioned further rearward than the planar oil guiding surface.

10. Device according to claim 8 or 9, wherein the deflection wall (10) comprises a smooth or ribbed plate, preferably covered with a coalescing media on the inner space (V) side.

11. Device according to any one of claims 8-10, wherein the deflection wall (10) is covered with nonwoven media (21) on the inner space (V) side.

12. Device according to any preceding claim, wherein the closure element (30) bears against an inner annular face (28) of the transfer wall (3), the stationary wall portion (12) being arranged at the end (16a) of a projection (16) which protrudes toward the deflection wall (10) from the inner annular face (28).

13. Device according to any preceding claim, wherein the transfer wall (3) further comprises an accelerated distribution channel, preferably parallel to a central axis (X) of the auxiliary opening (24), which extends through the transfer wall (3) between a first end defining an access opening and a second deformable end facing the deflection wall (10), the second deformable end being adapted to define a flow area that increases in size due to deformation of said second end when the gas flow rate increases in said inlet (2).

14. Device according to any preceding claim, wherein at least one among the transfer wall (3) and the deflection wall (10) comprises attachment members (31) distributed around the auxiliary opening (24) and extending parallel to a central axis (X) of the auxiliary opening, in order to maintain a predetermined spacing between the transfer wall and the deflection wall, at least one of the attachment members (31) traversing a layer defined by a fibrous material.

15. Device according to any preceding claim when dependent on claim 9, wherein the return member is a spring with constant K greater than 0.06 N/m.

**FIG. 1**

**FIG. 2**

**FIG. 3**

**FIG. 4**

FIG. 5

FIG. 6

FIG. 7

FIG. 8

FIG. 9

**EP 3 268 110 B1**

## RÉFÉRENCES CITÉES DANS LA DESCRIPTION

**Documents brevets cités dans la description**

- US 7799109 B

- US 20130032115 A1